# EUROPEAN PATENT SPECIFICATION

(11) **EP 0 896 174 B1**
(45) Date of publication and mention of the grant of the patent: **17.03.2004**
(21) Application number: 98114820.8
(22) Date of filing: 06.08.1998
(51) Int. Cl.: F16J 9/06, F16J 15/32

(54) **Piston ring arrangement for shock absorber**
Kolbenring für Dämpfungselemente
Segment de piston pour amortisseur

(30) Priority: 08.08.1997 JP 21496897
(43) Date of publication of application: 10.02.1999
(73) Proprietor: YAMAHA HATSUDOKI KABUSHIKI KAISHA, Iwata-shi Shizuoka-ken, 438 (JP)
(72) Inventor: Sawai, Seiji c/o Yamaha Hatsudoki Kabushiki Kaisha, Iwata-shi, Shizuoka-ken (JP)
(74) Representative: Grünecker, Kinkeldey, Stockmair & Schwanhäusser Anwaltssozietät

(56) References cited:
- EP-A- 0 481 469
- DE-A- 3 008 707
- GB-A- 2 072 799
- US-A- 4 005 769

## Description

The present invention relates to a piston ring arrangement comprising a piston ring for arrangement in a groove of a piston, said piston ring having an outer surface for sliding along a surface in sealing engagement, and an inner surface for arrangement in said groove, an elastic ring for sealing arrangement between said inner surface and said pistons, said elastic ring being arranged so as to separate an upper portion of said inner surface from a lower portion of said inner surface. Moreover, the application relates to a shock absorber.

A shock absorber (buffer) which, together with a coil spring, absorbs and dampens the vibration of a vehicle, etc. possesses a cylinder and a piston which slidably moves in the cylinder. The front end of the piston rod which projects from the cylinder is connected to the coil spring, and the piston is linked to the coil spring via the piston rod. The interior of the cylinder is filled with, eg, oil, and, accompanying movement of the piston in this oil, oil passes through an orifice which is provided in the piston, with the result that movement of the piston in the cylinder is controlled and slowed by the resistance to this passage of oil. Thus, vibration of the coil spring is dampened by this control of piston movement.

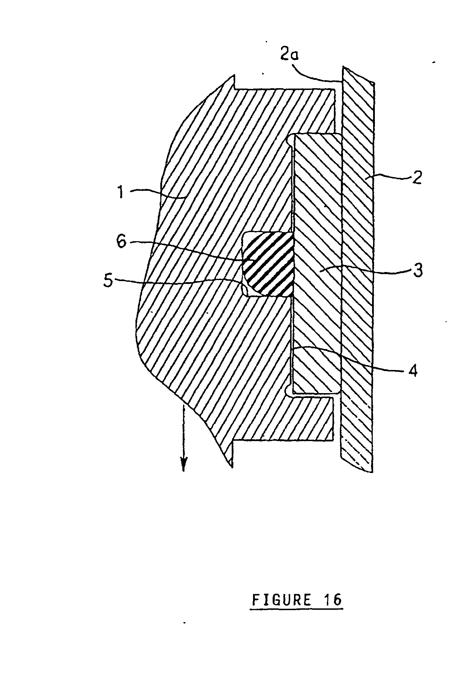

Fig. 16 is a partial cross section of a conventional piston. As shown in this Fig. 16, a piston ring 3 which is in sliding contact with the inner wall 2a of a cylinder 2 and prevents leakage of oil is fitted on a piston 1. This piston ring 3 is fitted in a strip-shaped groove 4 which is formed running peripherally on the outer peripheral surface of the piston 1, and the ring's own resilient force which acts to cause outward expansion presses the ring against the inner wall 2a of the cylinder 2. Thus, the outer-surface side of the piston ring 3 is in close contact with the inner wall 2a of the cylinder 2 and at its inner side wall a slight gap is formed between it and the bottom surface of the groove 4. At the rear surface of the piston ring 3, an O-ring 6 for preventing leakage of oil from the ring's inner surface side is fitted in a groove 5 which is formed in the bottom surface of the strip-shaped groove.

The piston ring 3, which moves along the inner wall 2a in oil which has been filled into the cylinder 2 together with the piston 1, is pushed in the direction which is opposite to the direction of this movement (see the arrow) by the pressure of the oil and is brought to a state in which it contacts the inner surface of one side wall of the strip-shaped groove 4. Thus, the piston ring 3 is alternately pushed against the side walls on the opposite sides of the strip-shaped groove 4 by the reciprocally moving piston 1, a gap is formed between it and the side wall which is on the opposite side to the contacted side, and oil flows into this gap. This oil is oil which is on the side in the direction in which the piston 1 is moving and it is at high pressure.

However, the piston ring side surface gap into which this high-pressure oil enters communicates with the gap at the rear surface of the piston ring 3 and so oil enters into the rear-surface gap from the gap at the piston ring side surface. This high-pressure oil which has entered at the ring rear surface acts from the inner side of the piston ring 3 to push the ring 3 more against the inner wall 2a of the cylinder 2. Consequently, the force of friction between the piston ring 3 and the inner wall 2a of the cylinder 2 increases, so constituting a hindrance to smooth movement of the piston 1 which moves reciprocally in the cylinder 2.

DE-A-30 08 707 discloses a piston arrangement comprising a piston ring for arrangement in a groove of a piston, said piston ring having an outer surface for sliding along a surface in sealing engagement, and an inner surface for arrangement in said groove. An elastic ring for sealing arrangement is disposed between said inner surface and said piston. Said piston ring is provided with communication means connecting said upper portion of the inner surface with a first portion on the outer surface.

The present invention has been devised from consideration of the prior art described above, and its object is to provide a piston ring arrangement which allows the force of friction between a piston ring and a sliding surface to be controlled very precisely.

In order to achieve the above object, the present invention provides a piston ring arrangement, wherein said piston ring is provided with communication means connecting said upper portion of the inner surface with a circular groove (30) of a first portion on the outer surface and connecting said lower portion of the inner surface with a circular groove (30) of a second portion on said outer surface.

Moreover, the technical problem above is solved by a shock absorber according to claim 8.

With the above structure, communication between the ring's inner peripheral surface (rear surface) and the grooves in the ring's outer peripheral surface is established by the communication means, and pressure which is exerted on the inner-surface side of the piston ring during sliding movement of the piston is led by the communication means to the grooves on the outer-surface side and dispersed. This makes it possible to design for equilibrium of pressure between the piston ring's inner and outer surfaces and it reduces the force with which the piston ring is pushed against the cylinder inner wall due to pressure exerted on the inner-surface side, and so makes it possible to reduce the force of friction between the piston ring and the cylinder inner wall.

Preferably, said piston ring is constituted by an endless ring wherein said grooves of said first and second portions of said outer surface are formed around said piston ring and wherein said communication means are formed by through holes.

With this structure, the piston ring's inner peripheral surface and the grooves at the ring's outer peripheral surface are connected by the through-holes which are provided in the endless ring and the pressure which is exerted on the piston ring's inner-surface side during sliding movement of the piston is led to the outer-surface side grooves via the through-holes and dispersed.

According to a another preferred embodiment, said piston ring is constituted by a split ring having a stepped cut in axial direction, the cut ends of said ring being joined at the step of said cut so as to form radially open portions spaced apart from each other and forming said communication means.

With this structure, the piston ring's inner peripheral surface and the groove at the ring's outer peripheral surface are connected by the split ring's joint, and the pressure which is exerted on the piston ring's inner-surface side during sliding movement of the piston is led to the outer-surface side groove via the joint and dispersed.

Further advantageous embodiments are laid down in the subclaims.

The invention will now be described by means of example with reference to the embodiments shown in the drawings.
Fig. 1 is a partial cross-section showing an embodiment of a shock absorber provided with a piston which is fitted with an embodiment of a piston ring.
Fig. 2 is a partial enlarged view of the piston of Fig. 1.
Fig. 3 is a perspective view of the piston ring.
Fig. 4 is a cross-sectional view of the piston ring mounting state along the line B-B of Fig. 3.
Fig. 5 is a perspective view of a piston ring constituted by an endless ring.
Fig. 6 is an enlarged view of the joint portion of the piston ring of Fig. 5.
Fig. 7 is a cross-sectional view of the piston ring mounting state along the C-C of Fig. 5.
Fig. 8 is an enlarged view of the joint portion of a piston ring constituted by another split ring.
Fig. 9 is a similar cross-sectional view along the line D-D of Fig. 8.
Fig. 10 is a similar cross-sectional view along the line E-E of Fig. 8.
Fig. 11 is an enlarged view of the joint portion of a piston ring constituted by another split ring.
Fig. 12 is a cross-sectional view of the piston ring mounting state along the line F-F of Fig. 11.
Fig. 13 is a similar cross-sectional view along the line G-G of Fig. 11.
Fig. 14 is a similar cross-sectional view along the line H-H of Fig. 11.
Fig. 15 is a similar cross-sectional view along the line I-I of Fig. 11.
Fig. 16 is a partial cross-section of a conventional piston ring arrangement.

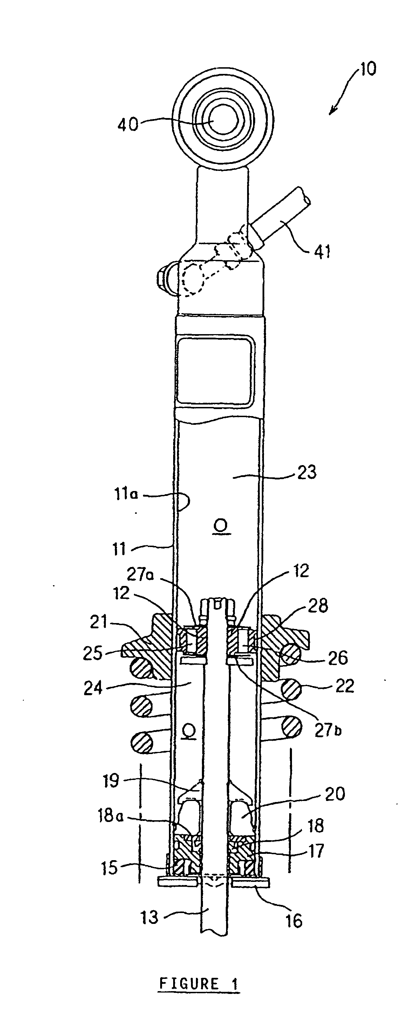

As shown in Fig. 1, a shock absorber (buffer) 10 which dampens the vibration of a resilient element such as a spring, etc. has a cylinder 11 and a piston rod 13 which is fitted to a piston 12 which slidably moves in the cylinder 11.

The piston 12 is fixed, via a sheet washer 14a which is fixed to the piston rod 13, by a hexagonal nut 14 to the end of the piston rod 13 which is inserted in the cylinder 11. A piston ring 28 is fitted on the outer periphery of the piston 12. Orifices 25 and 26 which pass through the piston 12 are formed, and plate valves 27a and 27b which close the open ends at respective ends of the orifices 25 and 26 are provided.

The piston rod 13 is installed together with a rubber seal 15 at the open end of the cylinder 11, passes through a rod guide 17 and a case cap 16 by which the rod guide is fixed and projects from the cylinder 11. The piston rod 13 is fitted in the rod guide 17 via a rod seal 18 which is held by a retainer 18a. A rebound stopper 20 which is held by a stopper holder 19 fixed to the piston rod 13 contacts the rod guide 17.

At the top end of the cylinder 11, there is a bolt insertion hole 40 for the purpose of mounting on a chassis frame, etc. The interior of the cylinder is connected via a pipe 41 to a gas pressure type free piston (not shown) for separating gas that is in oil.

The piston rod 13 tip end (not shown) on the side which projects from the cylinder 11 is connected to one end of a coil spring 22 whose other end is fixed to a spring shoe 21 on the outer periphery of the cylinder 11, and the piston 12 is linked to the coil spring 22 via the piston rod 13. The interior of the cylinder 11 is filled with oil O and, accompanying movement of the piston 12 in this oil 0, oil passes through the orifices 25 and 26 which are provided in the piston, and the resistance to this passage of oil controls and slows the movement of the piston 12 in the cylinder 11.

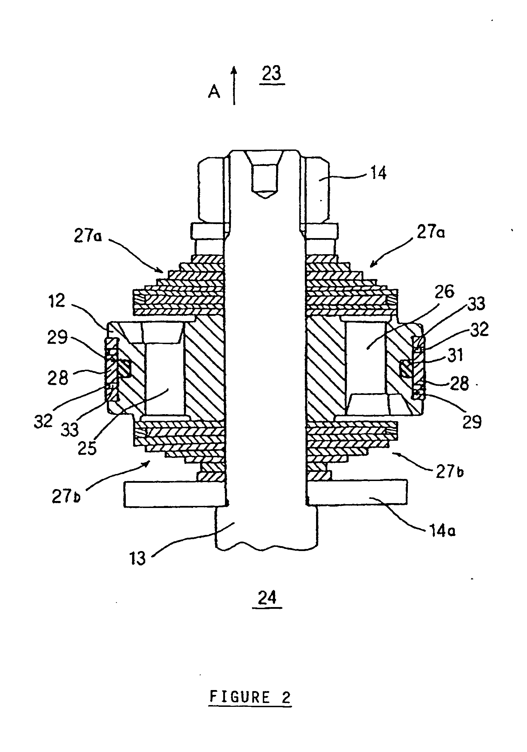

The interior of the cylinder 11 is divided into a 1st oil pressure chamber 23 and a 2nd oil pressure chamber 24 by the piston 12 (see Fig. 1). As illustrated in Fig. 2, a plurality of orifices 25 for compression and a plurality of orifices 26 for expansion are provided in the piston 12 in order to connect the 1st oil pressure chamber 23 and the 2nd oil pressure chamber 24 with one another. The plate valve 27a, which is installed with a gap between it and the orifices 25 for compression and closes the orifices 26 for expansion, is fitted on the 1st oil pressure chamber 23 side of the piston 12, and the plate valve 27b, which closes the orifices 25 for compression and is installed with a gap between it and the orifices 26 for expansion, is fitted on the 2nd oil pressure chamber 24 side. The two plate valves 27a and 27b are each formed by overlaying a plurality of circular, resilient plates (see Fig. 2) and they respectively effect independent opening and closure of the two sets of orifices 25 and 26.

Thus, when the piston rod 13 is pushed in and a force in the compression direction acts on the piston 12 (see the arrow A), the oil pressure in the 1st oil pressure chamber 23 rises, oil O in the 1st oil pressure chamber 23 flows into the orifices 25 for compression, the outer periphery portion of the plate valve 27b which closes the orifices 25 for compression is elastically deformed outward and, while the orifices 26 for expansion remain closed, the plurality of orifices 25 for compression are opened more or less uniformly. In a similar manner, when the piston rod 13 is pulled out and a force in the expansion direction acts on the piston 12, the oil pressure in the 2nd oil pressure chamber 24 rises, oil O in the 2nd oil pressure chamber 24 flows into the orifices 26 for expansion, the outer periphery portion of the plate valve 27a which closes the orifices 26 for expansion is elastically deformed outward and, while the orifices 25 for compression remain closed, the plurality of orifices 26 for expansion are opened more or less uniformly. As a result of the above, oil moves through the orifices, and the resistance to this movement slows the piston action and produces a buffering effect.

In this case, the flow rate of oil which passes through the orifices 25 and 26 is determined by the diameter(s) of the orifices 25 and 26 and the elastic force of the valve plates 27a and 27b, the speed of movement of the piston 12 is limited by the passage resistance in correspondence to this flow rate, and a buffering action is produced by the piston 12. Consequently, if the buffering action forces of the piston 12 on the forward and return strokes are made different and, in a vehicle suspension, for example, the forward stroke (at the time of compression) is made soft and the return stroke (at the time of expansion) is made hard, then, when the vehicle passes over a road surface projection, etc., the piston rod 13 is drawn in immediately on contact with the projection, so improving the follow-up characteristic, and when the piston 12 returns, it returns slowly, so making it possible to maintain good riding comfort.

The piston 12 which thus slides over the inner surface of the cylinder 11 is fitted with a piston ring 28 according to the invention which is in sliding contact with the inner wall 11a of the cylinder 11 (see Fig. 1) and prevents oil leakage, etc. This piston ring 28 is fitted in a strip-shaped groove 29 which is formed going peripherally in the outer peripheral surface of the piston 12 (see Fig. 2). Two grooves 32 are formed in the outer peripheral surface of the piston ring 28. These grooves 32 are connected to the rear surface of the piston ring 28 by through-holes 33.

The shock absorber of Fig. 1 may be used upside-down. In this case, the bolt insertion hole 40 is fitted on the axle side. Also, the vertical position of the coil spring 22 is suitably set.

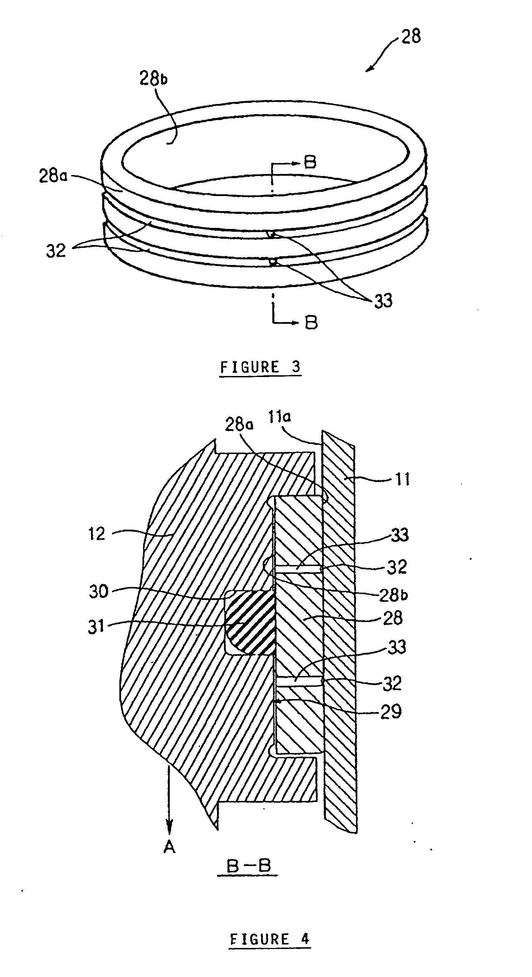

As shown in Fig. 3, the piston ring 28 is constituted by an endless ring which has the shape of a circular cylinder and which has circular grooves 32 for lead-in of pressure provided going peripherally in its outer peripheral surface 28a. The grooves 32 are formed continuously around the ring's entire outer peripheral surface 28a and two grooves are provided separated in the axial direction of the piston ring 28. Further, through-holes 33 which provide communication between the ring's inner peripheral surface 28b and respective grooves 32 of the ring's outer peripheral surface 28a are opened in the piston ring 28. Further, a groove 30 is formed in the bottom surface of a strip-shaped channel 29 which is in the central portion at the rear surface of the piston ring 28, and an O-ring 31 is fitted in this groove 30. The through-holes 33 are respectively formed in the piston ring 28 above and below this O-ring 31.

With the piston ring 28 possessing the structure described above, when the piston 12 moves in the direction of the arrow A (see Fig. 4), the piston ring 28 is pressed against the channel 29 side wall surface which is in the opposite direction (the upper side in the drawing). Therefore, gaps are formed at the piston ring 28 side surface which is below the O-ring 31 and at the rear surface, and high-pressure oil flows to the ring's rear surface. The pressure of this high-pressure oil acts on the ring's rear surface and it also acts on the ring's outer surface via a through-hole 33. Consequently, a pressure balance 'is maintained between the outer peripheral surface and inner peripheral surface at the ring's lower side (high-pressure side). Further, although oil whose pressure is lower than at the lower side acts on the piston ring rear surface which is above the O-ring 31, the pressure of this oil too acts on the ring's outer surface via a through-hole 33, and so a ring inner and outer surface pressure balance is maintained. As a result, accompanying piston movement, the pressure of the high-pressure oil and low-pressure oil acting on the piston ring rear surface is balanced over the entire piston ring and a smooth sliding action is produced.

Thus, even though the pressure of high-pressure and low-pressure oil is exerted on the inner side of the piston ring 28 accompanying movement of the piston 12, a portion of the oil O, both on the high-pressure side and on the low-pressure side, is led to the grooves 32 for lead-in of pressure from the inner-surface side of the piston ring 28 to the outer-surface side, so making it possible to aim for equilibrium of pressure between the inner and outer surfaces. As a result, an increase of the force with which the piston ring 28 is pushed against the inner wall 11a because of oil pressure is suppressed, the frictional force is reduced and it is possible to ensure smooth movement of the piston 12 which moves reciprocally in the cylinder 11. In this case, since the piston ring's outer surface grooves 32 for lead-in of pressure are formed continuously going peripherally around the ring, there is no occurrence of oil leakage in the axial direction accompanying movement of the piston. Also, at the ring's inner-surface side, the O-ring 31 effects sure prevention of oil leakage. The through-holes 33 which communicate with respective grooves 32 are not restricted to being single holes but a plurality thereof may be provided. In this case, it is possible to maintain a still better balance of ring inner and outer surface pressure by so providing the through-holes 33 that they are uniformly dispersed around the entire ring. Further, the number of grooves is not limited to being 2 but there may be 3 or 4 grooves.

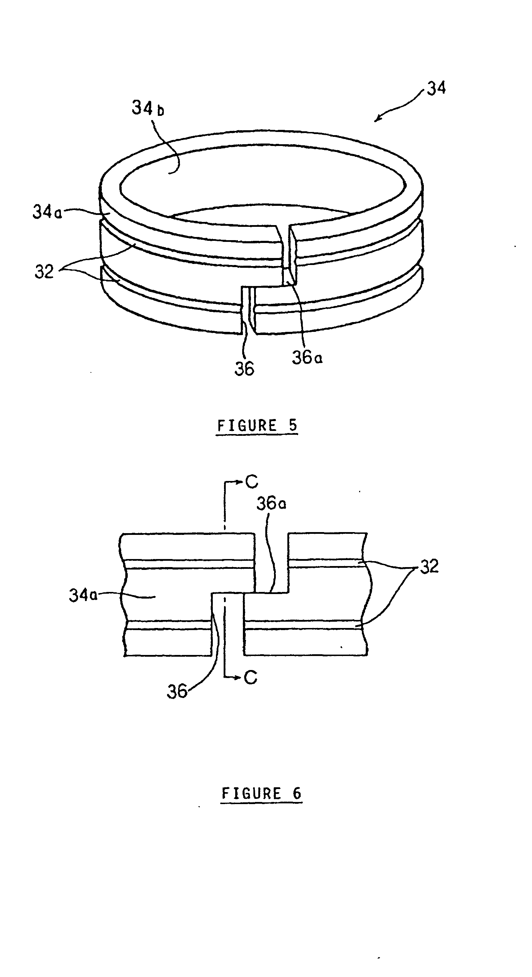

Fig. 5 is a perspective view of a piston ring constituted by a split ring according to another embodiment.

This example is one which, instead of using the through-holes 33 of the example described above, uses a piston ring joint as the means for providing communication between the piston ring's inner peripheral surface and grooves in the ring's outer peripheral surface, and its function, other parts of its structure and its effects and advantages are basically the same as in the example described above.

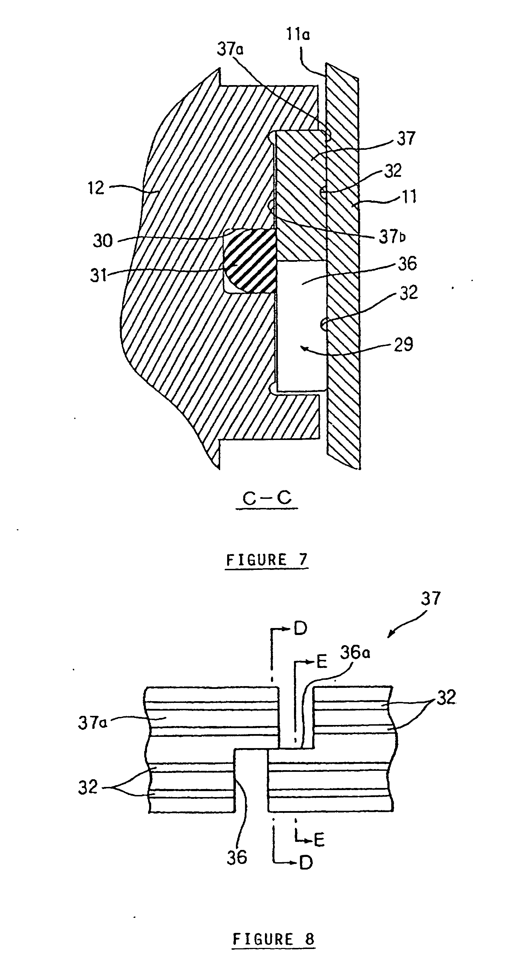

As shown in Fig. 5 and Fig. 6, a piston ring 34 is formed by a split ring with the shape of a circular cylinder possessing a joint 36 which is cut in the axial direction and, in approximately the center partway along the axial direction, goes by a circumferentially directed step difference. This joint 36 runs in the axial direction of the piston ring 34 and is cut to a step shape which goes via a circumferentially directed step difference portion 36a at one location in the central portion, and the piston ring 34 is cut away in a portion above one end and in a portion below the other end of the circumferentially directed step difference portion 36a. Similarly to the example described above, an O-ring 31 is fitted in a ring accommodation groove 30 at the location of the circumferentially directed step difference portion 36a at the rear surface of the piston ring 34 (see Fig. 7). Two circular grooves 32 which run in the peripheral direction are provided in the ring's outer peripheral surface 34a in a manner such that they do not affect the circumferentially directed step difference portion 36a and they extend from the joint 36 at their opposite ends. The gaps which divide the grooves 32 constitute communication means which provide communication between the ring's outer peripheral surface 34a and the ring's inner peripheral surface 34b.

With this split ring, a portion of the oil O is led to the ring's outer peripheral surface 34a from the ring's inner peripheral surface 34b, so making it possible to maintain an oil pressure balance between the high-pressure side and the low-pressure side at the ring's inner and outer surfaces, as in the example described above. The remaining structure and the effects and advantages are the same as in the example of Fig. 3 described above.

Even though a split ring is used, the seal characteristic of the joint 36 which is cut in the axial direction can be satisfactorily maintained. That is, since reciprocal movement of the piston 12 is accompanied by constant exertion of axially directed thrust pressure on the piston ring 34 which slides on the inner surface of the cylinder 11 and there is tight pressing at the circumferentially directed step difference portion 36a, there is no communication via this circumferentially directed step difference portion 36a between the two gaps which are formed above and below it. Further, since no groove 32 is formed at the circumferentially directed step difference portion 36a, there is no communication between the gaps via the grooves 32, and there is no impairment of the seal characteristic.

In this example, the structure may be simplified by omitting the O-ring 31. However, if an O-ring is provided, the seal characteristic is improved, in addition to which a pressure balance is rapidly reached both on the high-pressure side and on the low-pressure side and the pressure balance response to movement of the piston is improved, since movement of high-pressure oil to the low-pressure side is prevented.

Thus, even though the pressure of high-pressure and low-pressure oil is exerted on the inner side of the piston ring 28 accompanying movement of the piston 12, a portion of the oil O, both on the high-pressure side and on the low-pressure side, is led to the grooves 32 for lead-in of pressure from the inner-surface side of the piston ring 28 to the outer-surface side, so making it possible to aim for equilibrium of pressure between the inner and outer surfaces. As a result, an increase of the force with which the piston ring 28 is pushed against the inner wall 11a because of oil pressure is suppressed, the frictional force is reduced and it is possible to ensure smooth movement of the piston 12 which moves reciprocally in the cylinder 11. In this case, since the piston ring's outer surface grooves 32 for lead-in of pressure are formed continuously going peripherally around the ring, there is no occurrence of oil leakage in the axial direction accompanying movement of the piston. Also, at the ring's inner-surface side, the O-ring 31 effects sure prevention of oil leakage. The through-holes 33 which communicate with respective grooves 32 are not restricted to being single holes but a plurality thereof may be provided. In this case, it is possible to maintain a still better balance of ring inner and outer surface pressure by so providing the through-holes 33 that they are uniformly dispersed around the entire ring. Further, the number of grooves is not limited to being 2 but there may be 3 or 4 grooves.

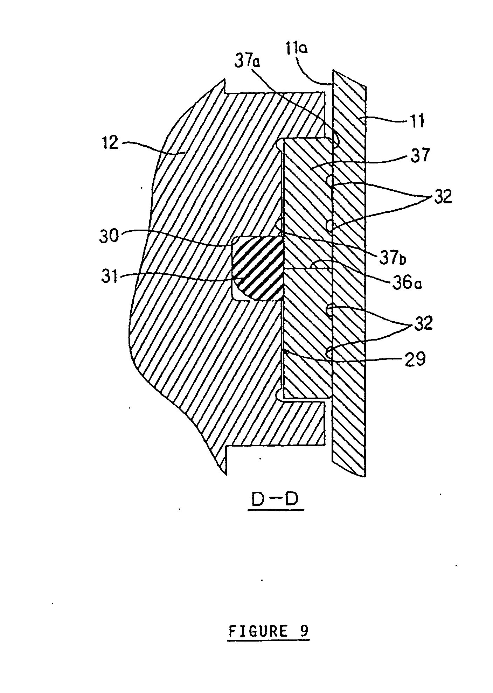

Fig. 8 is an enlarged view of the joint portion of a piston ring according to a further embodiment.

Like the example of Fig. 5, this example is constituted by a split ring, but in this example there is a total of 4 grooves at the joint, there being 2 each formed in the joint portions above and below the circumferentially directed step difference portion 36a. This increase of the number of grooves 32 in correspondence to the piston's dimensions, etc. is designed to improve the pressure balance response accompanying movement of the piston and to establish a pressure equilibrium between the inner and outer surfaces of the piston ring 37 more efficiently, and it makes .it possible to lower further still the force with which the piston ring 37 is pushed against the inner wall 11a due to oil pressure and also to achieve a smooth piston action. The remaining structure and the effects and advantages are the same as in the example of Fig. 5.

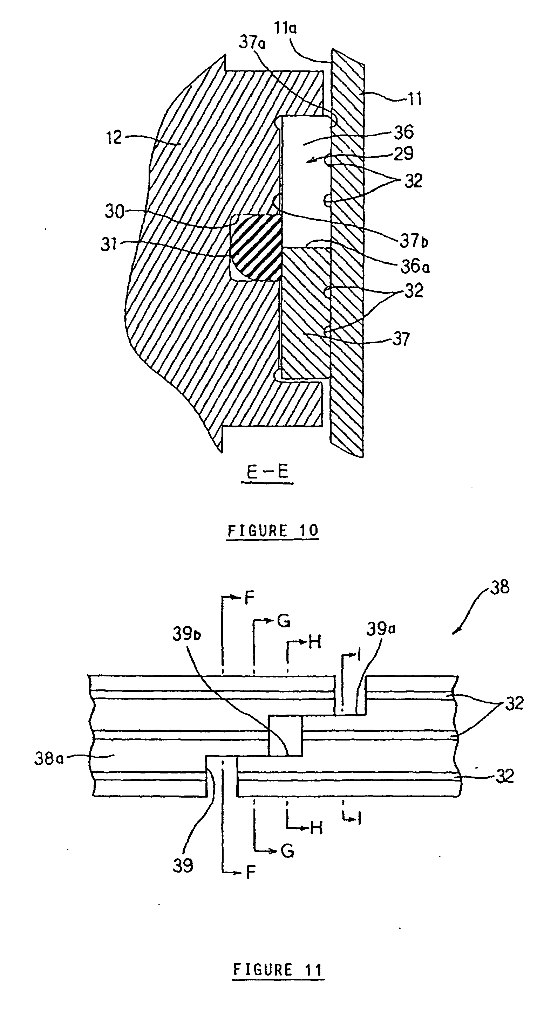

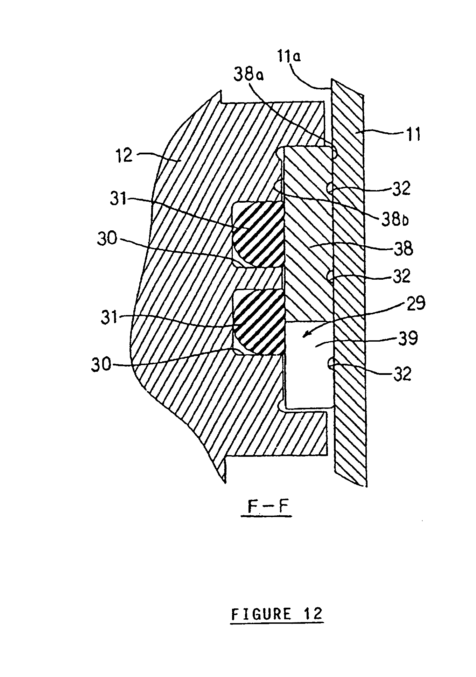

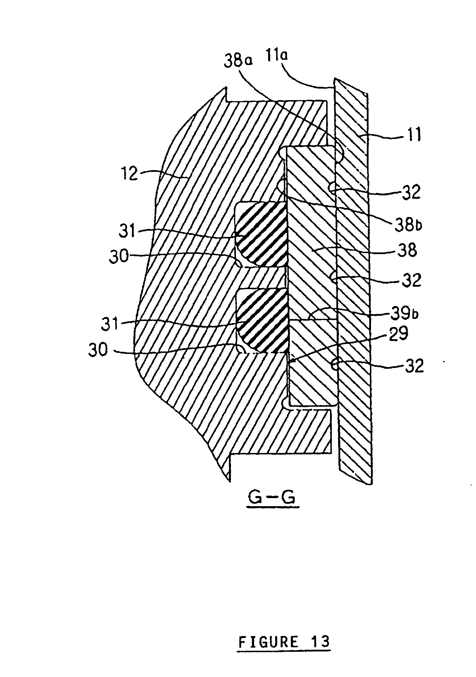

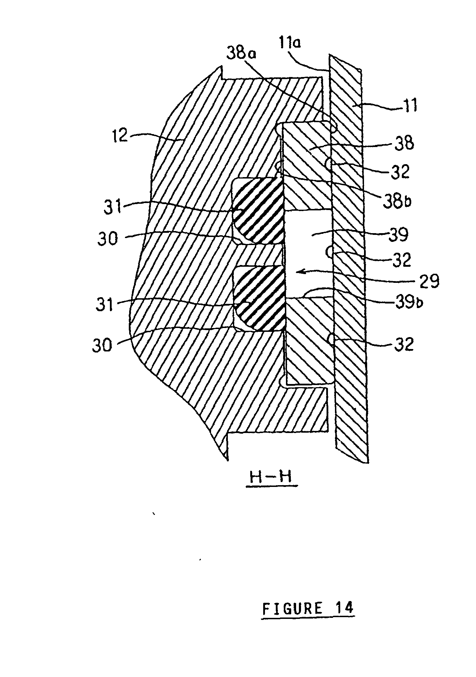

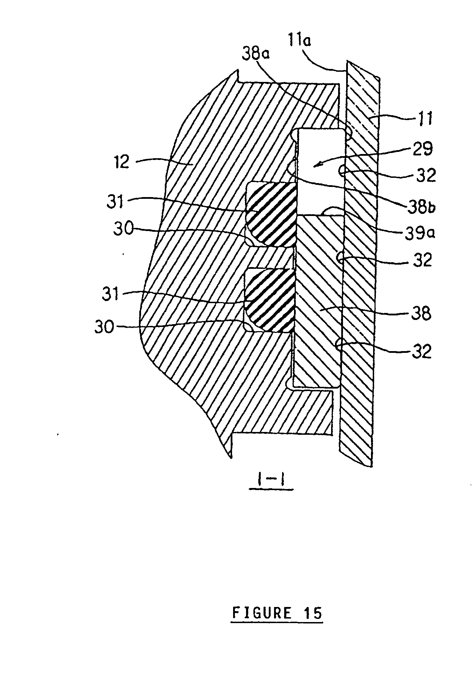

Fig. 11 is an enlarged view of the joint portion of a piston ring which is constituted by a split ring according to a still further example embodiment. The piston ring of this example is one which is formed by a split ring in which the circumferentially directed step difference portion 36a is made in 2 stages and which is provided with 3 grooves 32 for lead-in of pressure. Fig. 12 is a cross-sectional view of the piston ring mounting state along the line F-F of Fig. 11, Fig. 13 is a similar cross-sectional view along the line G-G of Fig. 11, Fig. 14 is a similar cross-sectional view along the line H-H of Fig. 11, and Fig. 15 is a similar cross-sectional view along the line I-I of Fig. 11.

As shown in Fig. 11, the piston ring 38 has a joint 39 which is divided into 3 stair-like stages by an upper step difference portion 39a and a lower step difference portion 39b which are at 2 locations partway along running in the axial direction of the piston ring 38. 3 grooves 32 for lead-in of pressure are provided extending over the 3-stage joint 39, in ring outer peripheral surface locations which do not affect the step difference portions 39a and 39b. Similarly to the examples described above, O-rings 31 are fitted at the rear-surface side of the two step difference portions 39a and 39b. When the piston moves, high, intermediate and low oil pressures act in turn, from the compression direction, on this 3-stage joint 39 and the piston ring 38 is pushed from the rear-surface side. However, since these oil pressures are respectively passed through the high-pressure, intermediate pressure and low-pressure joint portions and led to the grooves 32 of the outer surface, a pressure balance at the ring's outer and inner surfaces is maintained in each portion, so suppressing an increase in the friction resistance in respect of the cylinder's inner wall surface.

Further, since the three stages of the joint are offset in the circumferential direction, the high-pressure portion, intermediate-pressure portion and low-pressure portion do not affect one another, and a pressure balance at the piston ring's inner and outer surfaces can be quickly and surely maintained. The remaining structure and the effects and advantages are the same as in the example of Fig. 5.

The piston rings 34, 37 and 38 may, similarly to the example of Fig. 5, also be provided with through-holes as means for ring outer surface groove 32 and inner peripheral surface communication, in addition to the joints 36 and 39. When both joints and through-holes are used in this manner as communication means, the pressure balance response is improved and a still smoother piston sliding action is achieved.

Also, the number of pressure lead-in grooves 32 in the various examples described above can be arbitrarily set in accordance with the size of the piston rings 28, 34, 37 and 38 and with the conditions of use or the application, etc.

Although a description of the above examples of practice was given taking the example of application to an oil hydraulic cylinder which is used as a shock absorber of an automobile etc., the invention is not limited to this, but it can also be applied to a pneumatic cylinder or other gas pressure cylinder which is used for power steering or to a liquid pressure cylinder which is used in other hydraulic equipment, etc.

Since, as described above, in the piston ring according to the invention, the ring's inner peripheral surface of the piston ring is connected to grooves in the ring's outer peripheral surface by communication means and, during sliding movement of the piston, pressure exerted on the piston ring's inner-surface side is led via the communication means to the grooves of the outer-surface side, it is possible to design for equilibrium of pressure between the piston ring's inner and outer sides, the force with which the piston ring is pushed against the cylinder wall due to the pressure exerted on the inner-surface side is reduced and the force of the piston ring and cylinder inner wall friction can be reduced. Therefore, it is possible to ensure smooth movement of the piston which moves reciprocally in the cylinder.

If the structure is one which is constituted by an endless ring in which the abovenoted grooves are formed continuously and the communication means are through-holes, the ring's inner peripheral surface and the grooves of the ring's outer peripheral surface are connected by a simple structure, and manufacture and assembly work are easy.

Further, if the structure is one which is constituted by a split ring which has a joint which is cut in the axial direction and runs past a circumferentially directed step difference partway along in the axial direction, the abovenoted grooves are formed extending across this joint, without affecting the circumferentially directed step difference portion, and the joint, which divides the grooves, constitutes the communication means, the piston ring's inner peripheral surface and the grooves of the ring's outer peripheral surface can be connected even more simply by means of the joint and manufacture and assembly work are easy.

Further, since, even though a groove is formed running in the direction of the piston's periphery, a seal characteristic in the direction of the piston's axis can be satisfactorily ensured, no deterioration of buffering functions due to oil leakage is caused, and it is possible to maintain highly reliable functions and to maintain high design precision based on the design values of the hole diameters of orifices, etc.

## Claims

1. Piston ring arrangement comprising:
a piston ring (28; 34; 38) for arrangement in a groove (29) of a piston (12), said piston ring (28; 34; 38) having an outer surface (28a; 34a; 38a) for sliding along a surface in sealing arrangement in said groove,
an elastic ring (31) for sealing arrangement between said inner surface (28b; 34b; 38b) and said piston (12),
said elastic ring (31) being arranged so as to separate an upper portion of said inner surface (28b; 34b; 38b) from a lower portion of said inner surface (28b; 34b; 38b), and
said piston ring (28; 34; 38) is provided with communication means (33; 36, 36a; 39, 39a, 39b) connecting said upper portion of the inner surface (28b; 34b; 38b) with a circular groove (30) of a first portion on the outer surface (28a; 34a; 38a) and connecting said lower portion of the inner surface (28b; 34b; 38b) with a circular groove (30) of a second portion on said outer surface (28b; 34b; 38b).

2. Piston ring arrangement according to claim 1 **characterized in that** said piston ring (28) is constituted by an endless ring wherein said grooves (32) of said first and second portions of said outer surface (28a) are formed around said piston ring (28) and wherein said communication means (33) are formed by through holes (33).

3. Piston ring arrangement according to claim 1 **characterized in that** said piston ring (34; 38) is constituted by a split ring having a stepped cut in axial direction, the cut ends of said split ring being joined at the step of said cut so as to form radially open portions spaced apart from each other and forming said communication means (36, 36a; 39, 39a, 39b).

4. Piston ring arrangement according to claim 1 **characterized in that** said piston ring (34; 38) comprises for each communication means (36, 36a; 39, 39a, 39b) said groove (32) extending around said piston ring (34; 38) and across the respective communication means (36, 36a, 39, 39a, 39b).

5. Piston ring arrangement according to claims 1, 3 or 4 **characterized in that** a second elastic ring (31) for sealing arrangement between said inner surface (38b) and said piston (12) is provided, said second elastic ring (31) being arranged so as to sealingly separate another portion on said inner surface (38b) from said upper and lower portions, said another portion of said inner surface (38b) being connected to a third portion on the outer surface (38a) of said piston ring (38).

6. Piston ring arrangement according to one of claims 1 to 5, further comprising a piston body (12) having a circumferential groove (29) for receiving said piston ring (28; 34; 38) and a further groove (30) provided in said aforementioned groove for receiving said elastic ring (31), wherein said piston ring (28; 34; 38) and said elastic ring (31) are arranged in said grooves (29, 30) in such manner that a narrow space is formed between the inner surface (28b; 34b; 38b) of the piston ring (28; 34; 38) and the bottom of said groove (29) for receiving said piston ring (28; 34; 38), said space being separated by said elastic ring (31) so as to form separate chambers in said space.

7. Piston ring arrangement according to one of claims 3 to 5, **characterized in that** the elastic ring (31) is arranged so as to contact the inner surface (34b; 38b) of said piston ring (34; 38) at the step of the joint.

8. Shock absorber comprising a cylinder and a piston reciprocably arranged therein, and a piston ring arrangement according to one of claims 1 to 7.

## Patentansprüche

1. Kolbenringanordnung mit:
einem Kolbenring (28; 34; 38) zum Anordnen in einer Nut (29) eines Kolbens (12), wobei der Kolbenring (28; 34; 38) eine Außenoberfläche (28a; 34a; 38a) zum Gleiten entlang einer Oberfläche in abdichtender Anordnung in der Nut hat,
einem elastischen Ring (31) zur abdichtenden Anordnung zwischen der Innenoberfläche (28b; 34b; 38b) und dem Kolben (12),
wobei der elastische Ring (31) angeordnet ist, um einen oberen Abschnitt der Innenoberfläche (28b; 34b; 38b) von einem unteren Abschnitt der Innenoberfläche (28b; 34b; 38b) zu trennen, und
der Kolbenring (28; 34; 38) mit Verbindungsmitteln (33; 36, 36a; 39, 39a, 39b) versehen ist, die den oberen Abschnitt der Innenoberfläche (28b; 34b; 38b) mit einer kreisförmigen Nut (30) eines ersten Abschnittes auf der Außenoberfläche (28a; 34a; 38a) verbinden und die den unteren Abschnitt der Innenoberfläche (28b; 34b; 38b) mit einer kreisförmigen Nut (30) eines zweiten Abschnittes auf der Außenoberfläche (28a; 34a; 38a) verbinden.

2. Kolbenringanordnung nach Anspruch 1, **dadurch gekennzeichnet, dass** der Kolbenring (28) durch einen Endlosring gebildet ist, wobei die Nuten (32) der ersten und zweiten Abschnitte der Außenoberfläche (28a) rund um den Kolbenring (28) gebildet sind und wobei die Verbindungsmittel (33) durch Durchgangsbohrungen (33) gebildet sind.

3. Kolbenringanordnung nach Anspruch 1, **dadurch gekennzeichnet, dass** der Kolbenring (34; 38) durch einen geteilten Ring gebildet ist, der einen gestuften Schnitt in der axialen Richtung hat, die geschnittenen Enden des geteilten Ringes an der Stufe des Schnittes verbunden sind, um so radial offene, räumlich voneinander beabstandet Abschnitte zu bilden, die die Verbindungsmittel (36, 36a; 39, 39a, 39b) bilden.

4. Kolbenringanordnung nach Anspruch 1, **dadurch gekennzeichnet, dass** der Kolbenring (34; 38) für alle Verbindungsmittel (36, 36a; 39, 39a, 39b) die Nut (32) aufweist, die sich rund um den Kolbenring (34; 38) und quer über die jeweiligen Verbindungsmittel (36, 36a; 39, 39a, 39b) erstreckt.

5. Kolbenringanordnung nach Anspruch 1, 3 oder 4, **dadurch gekennzeichnet, dass** ein zweiter elastischer Ring (31) zur abdichtenden Anordnung zwischen der Innenoberfläche (38b) und dem Kolben (12) vorgesehen ist, der zweite elastische Ring (31) angeordnet ist, um einen weiteren Abschnitt auf der Innenoberfläche (38b) von den oberen und unteren Abschnitten abgedichtet zu trennen, wobei der weitere Abschnitt der Innenoberfläche (38b) mit einem dritten Abschnitt auf der Außenoberfläche (38a) des Kolbenrings (38) verbunden ist.

6. Kolbenringanordnung nach einem der Ansprüche 1 bis 5, außerdem mit einem Kolbenkörper (12), der eine Umfangsnut (29) zum Aufnehmen des Kolbenrings (28; 34; 38) hat, und eine weitere Nut (30), vorgesehen in der vorerwähnten Nut zum Aufnehmen des elastischen Ringes (31), wobei der Kolbenring (28; 34; 38) und der elastische Ring (31) in den Nuten (29, 30) in einer derartigen Weise angeordnet sind, dass ein enger Raum zwischen der Innenoberfläche (28b; 34b; 38b) des Kolbenrings (28; 34; 38) und dem Boden der Nut (29) zum Aufnehmen des Kolbenrings (28; 34; 38) gebildet wird, wobei der Raum durch den elastischen Ring (31) getrennt ist, um getrennte Kammern in dem Raum zu bilden.

7. Kolbenringanordnung nach einem der Ansprüche 3 bis 5, **dadurch gekennzeichnet, dass** der elastische Ring (31) angeordnet ist, um die Innenoberfläche (34b; 38b) des Kolbenrings (34; 38) an der Stufe der Verbindung zu berühren.

8. Stoßdämpfer mit einem Zylinder und einem Kolben, der in diesem hin- und hergehend angeordnet ist, und einer Kolbenringanordnung nach einem der Ansprüche 1 bis 7.

## Revendications

1. Agencement de segment de piston comprenant :
un segment de piston (28 ; 34 ; 38) pour un agencement dans une gorge (29) d'un piston (12), ledit segment de piston (28 ; 34 ; 38) présentant une surface extérieure (28a ; 34a ; 38a) pour coulisser le long d'une surface dans un agencement d'étanchéité dans ladite gorge,
un segment élastique (31) pour un agencement d'étanchéité entre ladite surface intérieure (28b; 34b; 38b) et ledit piston (12),
ledit segment élastique (31) étant agencé de manière à séparer une partie supérieure de ladite surface intérieure (28b ; 34b ; 38b) d'une partie inférieure de ladite surface intérieure (28b ; 34b ; 38b), et
ledit segment de piston (28 ; 34 ; 38) est pourvu de moyens de communication (33 ; 36, 36a ; 39, 39a, 39b) reliant ladite partie supérieure de la surface intérieure (28b ; 34b ; 38b) à une gorge circulaire (30) d'une première partie de la surface extérieure (28a ; 34a ; 38a) et reliant ladite partie inférieure de la surface intérieure (28b ; 34b ; 38b) à une gorge circulaire (30) d'une deuxième partie sur ladite surface extérieure (28b ; 34b ; 38b).

2. Agencement de segment de piston selon la revendication 1, **caractérisé en ce que** ledit segment de piston (28) est constitué d'un segment sans fin dans lequel lesdites gorges (32) desdites première et deuxième parties de ladite surface extérieure (28a) sont formées autour dudit segment de piston (28) et dans lequel lesdits moyens de communication (33) sont formés par des trous débouchants (33).

3. Agencement de segment de piston selon la revendication 1, **caractérisé en ce que** ledit segment de piston (34 ; 38) est constitué d'une bague fendue présentant une découpe étagée dans la direction axiale, les extrémités découpées de ladite bague fendue étant jointes au niveau de l'étagement de ladite découpe afin de former des parties ouvertes de manière radiale espacées les unes des autres et formant lesdits moyens de communication (36, 36a ; 39, 39a, 39b).

4. Agencement de segment de piston selon la revendication 1, **caractérisé en ce que** ledit segment de piston (34 ; 38) comprend pour chaque moyen de communication (36, 36a ; 39, 39a, 39b) ladite gorge (32) s'étendant autour dudit segment de piston (34 ; 38) et à travers les moyens de communication respectifs (36, 36a ; 39, 39a, 39b).

5. Agencement de segment de piston selon les revendications 1, 3 ou 4, **caractérisé en ce qu'**un second segment élastique (31) pour un agencement d'étanchéité entre ladite surface intérieure (38b) et ledit piston (12) est prévu, ledit second segment élastique (31) étant agencé de manière à séparer de manière étanche une autre partie sur ladite surface intérieure (38b) desdites parties supérieure et inférieure, ladite autre partie de ladite surface intérieure (38b) étant reliée à une troisième partie sur la surface extérieure (38a) dudit segment de piston (38).

6. Agencement de segment de piston selon l'une des revendications 1 à 5, comprenant en outre une jupe de piston (12) présentant une gorge périphérique (29) destinée à recevoir ledit segment de piston (28 ; 34 ;38) et une autre gorge (30) prévue dans ladite gorge mentionnée auparavant destinée à recevoir ledit segment élastique (31), dans lequel ledit segment de piston (28 ; 34 ; 38) et ledit segment élastique (31) sont agencés dans lesdites gorges (29 ; 30) d'une manière telle qu'un espace étroit est formé entre la surface intérieure (28b ; 34b ; 38b) du segment de piston (28 ; 34 ; 38) et le fond de ladite gorge (29) destinée à recevoir ledit segment de piston (28 ; 34 ; 38), ledit espace étant séparé par ledit segment élastique (31) de manière à former des chambres séparées dans ledit espace.

7. Agencement de segment de piston selon l'une des revendications 3 à 5, **caractérisé en ce que** ledit segment élastique (31) est agencé de manière à entrer en contact avec la surface intérieure (34b ; 38b) dudit segment de piston (34 ; 38) au niveau de l'étagement du joint.

8. Amortisseur comprenant un cylindre et un piston agencé en mouvement alternatif à l'intérieur, et un agencement de segment de piston selon l'une des revendications 1 à 7.
